# EUROPEAN PATENT SPECIFICATION

(11) **EP 2 265 079 B1**
(45) Date of publication and mention of the grant of the patent: **10.08.2016**
(21) Application number: 09251580.8
(22) Date of filing: 17.06.2009
(51) Int. Cl.: H04W 4/20, H04W 52/02, H04W 68/00

(54) **Method for providing private information to mobile user and associated wireless communication network and mobile station**
Verfahren zur Bereitstellung von privaten Informationen an einem mobilen Nutzer und zugehöriges drahtloses Kommunikationsnetzwerk und Mobilstation
Procédé de fourniture d'informations privées à un utilisateur mobile et réseau de communication sans fil et station mobile correspondants

(43) Date of publication of application: 22.12.2010
(73) Proprietor: HTC Corporation, Taoyuan City 330 (TW)
(72) Inventor: Lee, Ching-Hao, Taoyuan City Taoyuan County 330 (TW); Hsieh, Wen-Jui, Taoyuan City Taoyuan County 330 (TW)
(74) Representative: Wagner & Geyer

(56) References cited:
- EP-A- 1 450 570
- WO-A-2008/097593

## Description

### BACKGROUND OF INVENTION

### 1. FIELD OF THE INVENTION

The present invention relates to wireless communication networks, and more particularly to a method for providing a private information to a mobile user and an associated wireless communication network and mobile station.

### 2. DESCRIPTION OF THE PRIOR ART

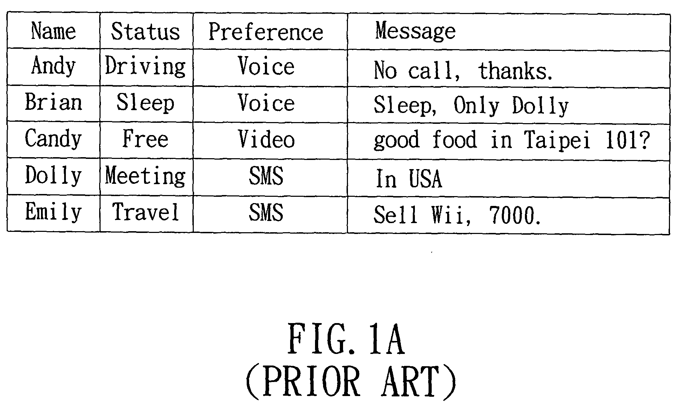

In recent years, one kind of mobile network service is developed to real time inform a user equipment or mobile station (e.g. a mobile phone) of a mobile user about his private information, e.g. the updated information of his contacts. The MSN Mobile service is a well-known mobile network service of this kind. Fig. 1A shows an example of a contact table stored in the user equipment, where the name, current status, preferred communication tool (e.g. voice call, video call, SMS, etc.) and short message of each contact are recorded. By reviewing the contact table, the mobile user can obtain real time information about each contact, and prepare well before making a call to his contact.

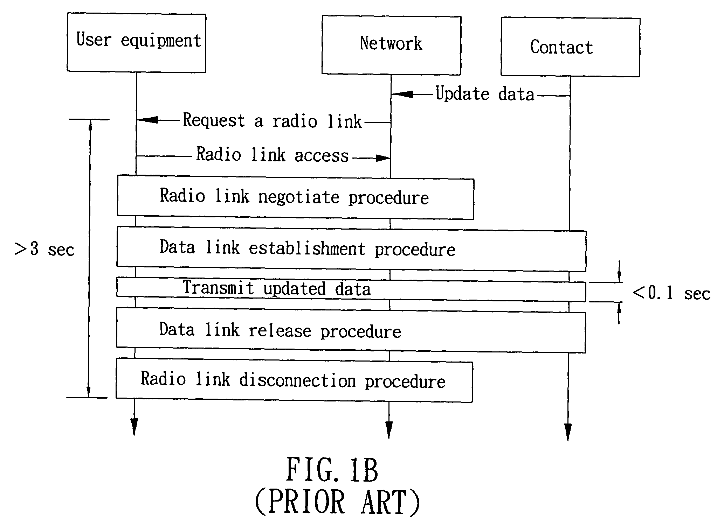

In prior arts, when implementing this kind of mobile network service, the mobile network transmits the updated data of the contact table to the user equipment by a dedicated radio link. Fig. 1B shows a conventional data transmission process of the dedicated radio link. As shown in Fig.1B, when a contact of the user equipment updates his data, the network requests the user equipment to establish a dedicated radio link. The whole process from the start to the end of the dedicated radio link lasts a time period longer than 3 seconds, while the actual time duration for transmitting the updated data may be just shorter than 0.1 seconds. That is, the user equipment consumes large power and radio link bandwidth for transmission and reception of the over-the-air messages when performing various procedures (i.e. radio link negotiation procedure, data link establishment procedure, data link release procedure, radio link disconnection procedure, etc.) that are irrelevant to transmission of the updated data.

Furthermore, the dedicated radio link is established each time when new updated data of the contact table is generated. That is, the times of establishing the dedicated radio link (i.e. the times of updating the contact table) is proportional to the number of contacts in the contact table. Also, each contact may update his data many times in a day. For example, if the contact table contains 50 contacts and each contact updates his data ten times in a day, then the user equipment needs to establish the dedicated radio link 50*10=500 times in a day. This will cause a huge consumption of power and radio link bandwidth, which is very unfavorable to the performance of the user equipment and also the mobile network.

WO 2008/097593 A2 relates to an apparatus and a method for paging in a HSDPA connected mode CELL_PCH or URA_PCH state. A mobile station or WTRU is configured to select various PICH information that is broadcast by a base station. The WTRU is configured to receive paging messages, based on the selected PICH information, or based on a PICH, a HS-SCCH, and a HS-PDSCH, or based on a PICH and a HS-PDSCH. A time delay parameter is preferably used so that the WTRU may listen for either the HS-SCCH or HS-PDSCH for a period of time and return to a sleep mode if no paging message is received.

EP 1 450 570 A1 discloses that an application server component of an apparatus communicates to one or more mobile stations, of a plurality of mobile stations, one or more updates of one or more statuses of respective one or more mobile stations of the plurality of mobile stations. The plurality of mobile stations comprise a first mobile station and a second mobile station, wherein the one or more updates of the one or more statuses of the respective one or more mobile stations comprise an update of a status of the first mobile station. The application server component communicates the update of the status of the first mobile station to the second mobile station to indicate to the second mobile station whether the first mobile station is available for participation in a call with the second mobile station.

### SUMMARY OF INVENTION

It is therefore one objective of the present invention to provide a method for providing a private information to a mobile user and an associated wireless communication network and mobile station, thereby reducing the consumption of power and radio link bandwidth for the transmission of the private information.

In one embodiment of the present invention, a method used in a wireless communication network for providing a private information to a mobile user is provided as set forth in claim 1.

In another embodiment of the present invention, a wireless communication network for providing a private information to a mobile user is provided as set forth in claim 4.

In another embodiment of the present invention, a mobile station for receiving a private information of a mobile user from a wireless communication network is provided as set forth in claim 9.

Preferred embodiments of the present invention may be gathered from the dependent claims.

### BRIEF DESCRIPTION OF THE DRAWINGS

Fig. 1A shows an example of a contact table stored in a user equipment.
Fig. 1B shows a conventional data transmission process of a dedicated radio link.
Fig.2 is a flow chart of a method for providing a private information to a mobile user according to an embodiment of the present invention.
Fig. 3 shows the status of power consumption of a mobile station operating in a DRX mode in prior arts.
Fig. 4 shows the status of power consumption of a mobile station operating in a DRX mode according to an embodiment of the present invention.
Fig. 5 shows the status of power consumption of a mobile station operating in a DRX mode according to another amangement.
Fig.6 shows a block diagram of an embodiment of the wireless communication network implementing the method of Fig.2.
Fig.7 shows an example of the contact table stored in both the database and the mobile station of Fig.6.
Fig.8 shows an architectural diagram of another embodiment of the wireless communication network implementing the method of Fig.2.
Fig.9 shows a block diagram of an embodiment of the mobile station 62 in Fig.6 according to the present invention.

### DETAILED DESCRIPTION

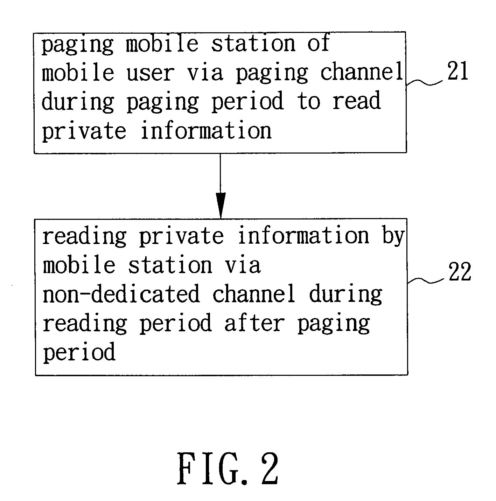

Reference will now to be made in detail to embodiments of the present invention, which are illustrated in the accompanying drawings. Fig.2 is a flow chart of a method for providing a private information to a mobile user according to an embodiment of the present invention. This method is used in a wireless communication network, and the mobile user utilizes a mobile station to receive the private information from the wireless communication network. The private information, maybe provided as a charged network service or network application, is specific to the mobile user and for personal usage. An example of the private information is the real-time-updated data for a contact table stored in the mobile station of the mobile user. In step 21, the network pages the mobile station of the mobile user via a paging channel during a paging period to read the private information. In a conventional mobile network, when a call is initiated by a source mobile station, paging is used to find the destination mobile station for the call. Typically, the conventional mobile network pages a specific group of mobile stations (e.g. the mobile stations located in the same location area or registration area) by sending a paging message via the paging channel during the paging period to each mobile station within the group, where the paging channel is a shared channel allocated for the purpose of paging, the paging period is a predetermined time slot for the network to perform paging, and the paging message contains a paging cause for informing the mobile station what the current paging is for. For example, in a UMTS (i.e. Universal Mobile Telecommunications System) network, the paging cause may be "Terminating Conversation Call", "Terminating Streaming Call"...etc., and each kind of paging cause can be represented by one bit data. When the mobile station receives the paging message, it will determine whether itself is the destination mobile station according to the received paging message. In the embodiment of Fig.2, however, the conventional way of paging is modified to simultaneously achieve two purposes of finding the destination mobile station for a call and informing a specific mobile station to get its own private information from the network. More specifically, in step 21, when there is a private information to be provided to the mobile user, the network generates a modified paging message different from the conventional paging message mentioned above, where the modified paging message containing a new paging cause "Terminating private information" used for informing the mobile station to read the private information. Then, the network pages the mobile station by sending the modified paging message via the paging channel during the paging period, so as to inform the mobile station to read the private information from the network. It is notable that the modified paging message can still contain the paging cause used for finding the destination mobile station of a call, just as the conventional paging message.

Next, in step 22, the mobile station reads the private information via a non-dedicated channel during a reading period after the paging period, where the non-dedicated channel can be an existing shared channel of the network (i.e. borrowing some radio link bandwidth from the existing channel for transmitting the private information) or a new channel allocated for the purpose of transmitting the private information. Thus, the mobile station establishes a non-dedicated radio link with the network to get the private information. In prior arts, the mobile station needs to establish a dedicated radio link with the network to get the private information. As shown in Fig.1B, in the whole process of the dedicated radio link, the mobile station performs various procedures and thus continuously consumes huge power and radio link bandwidth in transmitting and receiving over-the-air (OTA) messages. However, in the present invention, in step 22 of Fig.2, the whole process of maintaining the non-dedicated radio link is much shorter and simpler than the dedicated radio link. Thus, the non-dedicated radio link saves much more power and radio link bandwidth than the dedicated radio link. Since the non-dedicated channel is not dedicated to a specific mobile station by nature, the non-dedicated channel may be shared by plural mobile stations and may not promise a fast, reliable and secure data delivery. Thus, the embodiment of Fig.2 has best performance for the data traffic with quality of service (QoS) requirements such as small data quantity (maybe just tens of bytes), no need for fast data update, almost only downlink data, or low reliability and security. The update of the contact table of the mobile station is just a good example for applying the above QoS requirements.

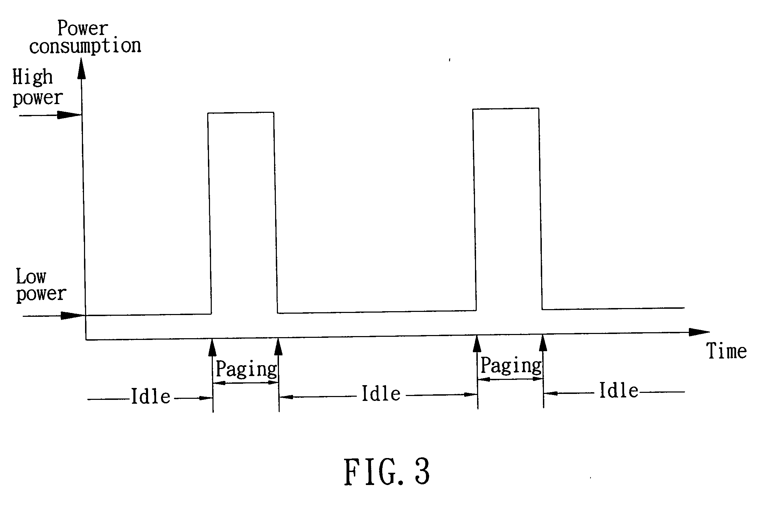

In a preferred embodiment, the mobile station of the mobile user is capable of operating in a discontinuous reception (DRX) mode. When operating in the DRX mode, the mobile station can hear the paging message from the network in a discontinuous way as shown in Fig.3, i.e. during each unit of time (e.g. one second), the mobile station just wakes up from an idle state (consuming a low power) for a short period of time (e.g. 100 milli-second), so as to hear if the network pages it. This short period of time is called a paging DRX cycle. During the paging DRX cycle, the mobile station turns on RF and baseband power, and thus costs a high power as shown in Fig.3. In this preferred embodiment, in step 21, the paging period during which the network pages the mobile station to read the private information is then a paging DRX cycle.

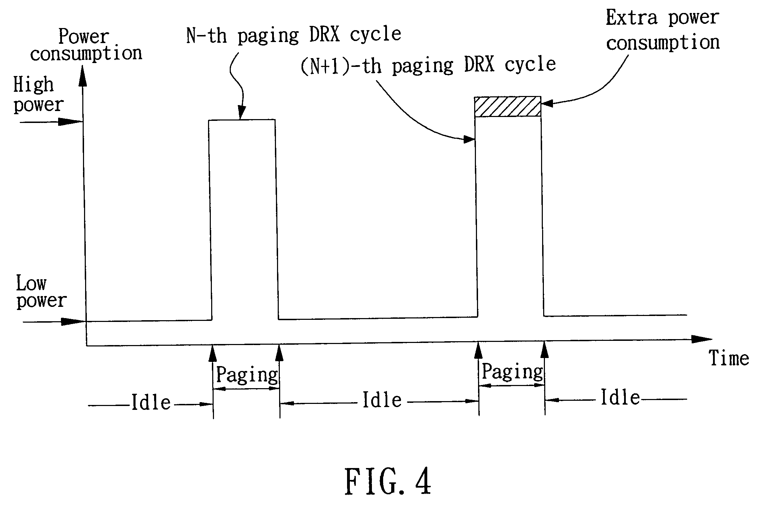

In step 22 of this preferred embodiment, as shown in Fig.4, the reading period for the mobile station to read the private information can be a next paging DRX cycle (i.e. the (N+1)-th paging DRX cycle) after the paging DRX cycle for the network to page the mobile station to read the private information (i.e. the N-th paging DRX cycle). Since the mobile station has already waken up during the (N+1)-th paging DRX cycle, the mobile station can directly read the private information via the non-dedicated channel with only few extra power consumption in reading and processing the private information, as shown in Fig.4. It is notable that the reading period can also be another paging DRX cycle, rather than the (N+1)-th paging DRX cycle, after the N-th paging DRX cycle.

Basically, the paging channel is not used as the non-dedicated channel for reading the private information. But, if the data quantity of the private information is quite small, then the private information can be embedded in a paging message, and the mobile station can get the private information by receiving this paging message via the paging channel, that is, the non-dedicated channel for reading the private information is just the paging channel in this situation.

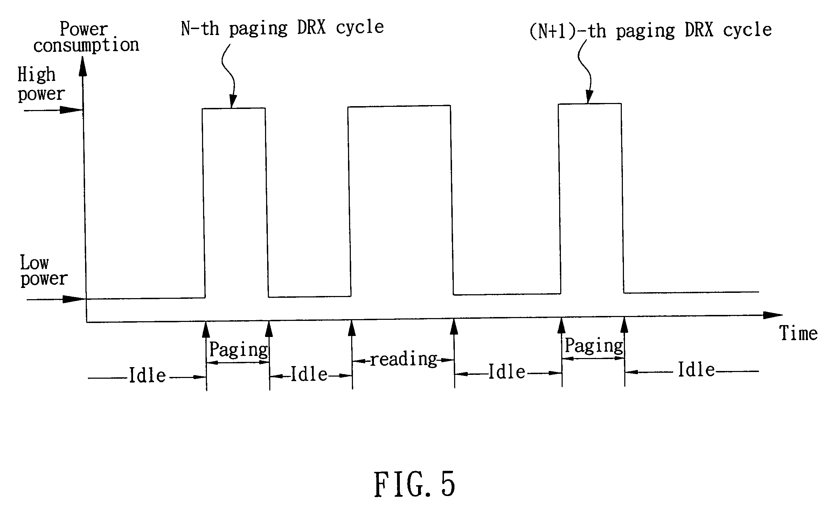

The reading period for reading the private information can also be other predetermined time period (rather than any subsequent paging DRX cycle) after the N-th paging DRX cycle, as shown in Fig.5. In this case, the mobile station needs to wake up from the idle mode one more time (rather than utilizes the existing wake-up state during a subsequent paging DRX cycle) and occupies the downlink radio link bandwidth of the non-dedicated channel during the reading period. Even so, the consumption of power and radio link bandwidth is still less than the case of reading the private information via the dedicated channel. When the data quantity of the private information is not quite small such that the mobile station cannot read all the private information during a single paging DRX cycle, this case is more suitable for implementation. In addition, if there are plural mobile stations paged to read their own private information during the N-th paging DRX cycle, the reading period for each mobile station or each sub-group of the plural mobile stations can be synchronized according to the N-th paging DRX cycle, so as to separate the reading periods for different mobile stations or different sub-groups of mobile stations. For instance, 0~100 milli-seconds after the N-th paging DRX cycle can be defined as the reading period of the first mobile station, 101~200 milli-seconds after the N-th paging DRX cycle can be defined as the reading period of the second mobile station...and so on. In this manner, the congestion of the non-dedicated channel can be avoided, and thus the efficiency of providing the private information can be upgraded.

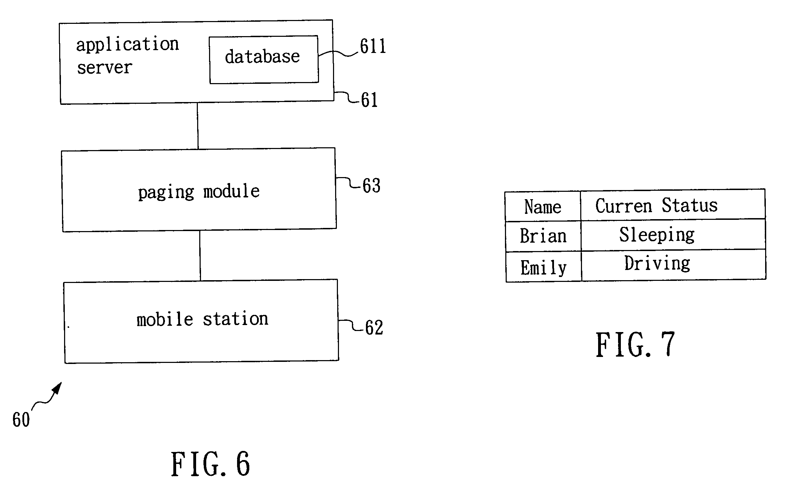

Fig.6 shows a block diagram of an embodiment of the wireless communication network implementing the method of Fig.2. As shown in Fig.6, the wireless communication network 60 comprises an application server 61, a mobile station 62 and a paging module 63. The application server 61 comprises a database 611 for storing the private information of the mobile user. The mobile station 62 is used by the mobile user to get his private information. The paging module 63 receives from the application server 61 the private information to be provided to the mobile station 62, and pages the mobile station 62 via the paging channel during the paging period to read the private information. After being paged, the mobile station 62 reads the private information from the paging module 63 via the non-dedicated channel during the reading period after the paging period.

If the mobile station 62 is capable of operating in the DRX mode, then when the mobile station 62 operates in the DRX mode, the paging period is a paging DRX cycle and the reading period is another paging DRX cycle (e.g. a next paging DRX cycle) after the paging DRX cycle. When the data quantity of the private information is small, the non-dedicated channel can be the paging channel. In this case, the mobile station 62 receives a paging message embedded with the private information from the paging module 63 via the paging channel during the another paging DRX cycle mentioned above.

In a preferred embodiment of the wireless communication network 60, each of the database 611 and the mobile station 62 stores a contact table of the mobile user, and the contact table stores related data of each contact of the mobile user. When the related data of any contact stored in the contact table of the database 611 is changed, the application server 61 generates the private information comprising an update of the related data of the contact. After reading the private information, the mobile station 62 will update its contact table according to the update of the related data of the contact. Fig.7 shows an example of the contact table stored in both the database 611 and the mobile station 62, where two contacts Brian and Emily are shown. In Fig.7, the related data of each contact comprises an identifier (the name in this case) and a current status of the contact. By knowing the current status of the contact, the mobile user determines whether to call the contact at this time point. For example, if the current status of the contact is "sleeping", then it may not be proper to call the contact at the present. It should be noted that the contact table shown in Fig.7 is just an example, and other kinds of contact tables can also be applied to the present invention as long as they stores the related data of the contacts.

In addition to the private information to be provided, the paging module 63 further receives an identity of the mobile station from the application server 61. The paging module 63 can then page the mobile station 62 according to the received identity. The identity of the mobile station 62 can be an International Mobile Subscriber Identity (IMSI).

The paging module 63 further receives from the application server 61 a corresponding value tag of the private information for indicating how recent the private information is. This value tag can be used to determine if the mobile station 62 loses any private information. For example, the value tag can be configured as increased by one each time when a new private information is generated. Then, when the mobile station 62 reads a private information, it compares the corresponding value tag of the current private information with that of the last-read private information, so as to determine if any private information is lost. If the value tag of the current private information is 10 while that of the last-read private information is 9, then no private information is lost; if the value tag of the current private information is 10 while that of the last-read private information is 7, then the private informations with the corresponding value tags 8 and 9 are lost. In this case, the mobile station can make a request to the paging module 62 to re-send the lost private informations.

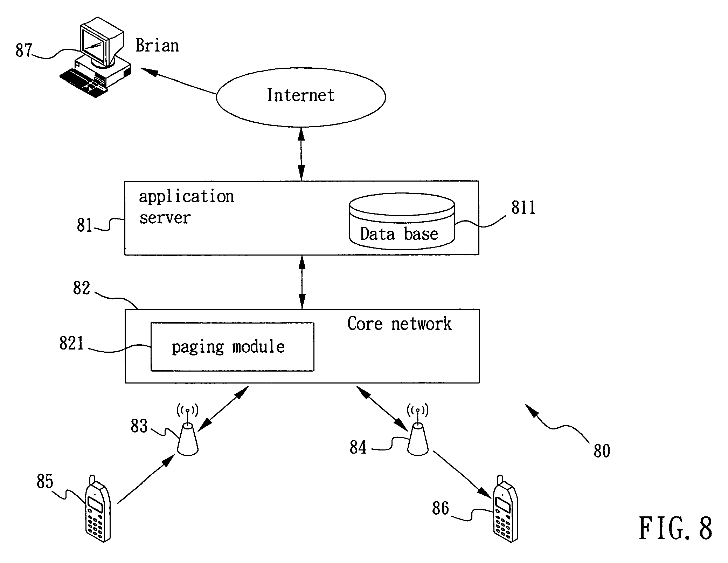

Fig.8 shows an architectural diagram of another embodiment of the wireless communication network implementing the method of Fig.2. In this embodiment, the wireless communication network 80 can perform a network service of providing the private information to a mobile station for real time updating the contact table stored therein. The wireless communication network 80 comprises an application server 81, a core network 82, two base stations 83 and 84, and two mobile stations 85 and 86 (shown as mobile phones in Fig.8). The application server 81 includes a database 811 for storing a corresponding contact table for each mobile user who registers for the network service. The format of the contact table can be designed as, while not limited to, Fig.1A or Fig.7. The core network 82 includes a paging module 821. The mobile station 85, belonging to the mobile user Candy, can communicate with the core network 82 via the base station 83; the mobile station 86, belonging to the mobile user Emily, can communicate with the core network 82 via the base station 84. Since both Candy and Emily have registered for the network service, the database 811 also stores the contact tables of Candy and Emily. When the mobile station 85 (or 86) is powered on, it downloads the current contact table of Candy (or Emily) from the database 811. Thus, the mobile stations 85 and 86 respectively store the contact tables of Candy and Emily.

If Candy is a contact within the contact table of Emily, then when Candy uses the mobile station 85 to inform the application server 811 via the base station 83 and the core network 82 that her current status or other related data is changed, the application server 81 updates the contact table of Emily stored in the database 811, and then transfers a private information (including the updated data of Candy), a corresponding value tag, and an identity (e.g. IMSI) of Emily to the paging module 821, which then pages the mobile station 86 of Emily to get the private information. After being paged, the mobile station 86 reads the private information from the paging module 821. The way in which the paging module 821 pages the mobile station 86 and the mobile station 86 reads the private information is similar to the paging module 63 and the mobile station 62, and thus will not be described again here.

It is notable that the network service provided by the wireless communication network 80 can be extended to an Internet user as Brian, who can use an Internet access tool 87 (shown as a PC in Fig.8) to connect to the network 80 via the Internet. If Brian registers to the application server 81 through the Internet, the database 811 will store a contact table of Brian. If Candy is also a contact within the contact table of Brian, then when Candy updates her related data, the application server 81 updates the contact table of Brian stored in the database 811, and then informs Brian of the updated data via the Internet. It is also notable that the application server 81 may be located within, rather than outside, the core network 82.

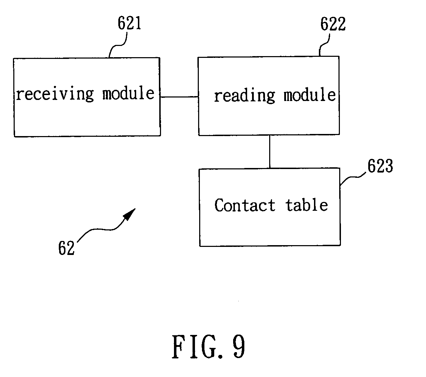

Fig.9 shows a block diagram of an embodiment of the mobile station 62 in Fig.6 according to the present invention. As shown in Fig.9, the mobile station 62 comprises a receiving module 621, a reading module 622 and a contact table 623. The receiving module 621 is for receiving a paging message 60 via the paging channel of the wireless communication network 60 during the paging period, where the paging message is used to page the mobile station 62 to read a private information. The reading module 622 is for reading the private information via the non-dedicated channel of the wireless communication network 60 during the reading period after the paging period. The contact table 623 has a format similar to Fig.7, and is used for storing related data of each contact of the mobile user. The private information read by the reading module 622 comprises an update of the related data, and is used by the reading module 622 to update the contact table 623. In this embodiment, each of the receiving module 621 and the reading module 622 can be a software module executed by the mobile station 62.

While the present invention has been shown and described with reference to the preferred embodiments thereof and the illustrative drawings, it should not be considered as limited thereby. Various possible modifications and alterations can be conceived by persons skilled without departing from the scope of the present invention as defined by the appended claims.

## Claims

1. A method used in a wireless communication network (60) for providing a private information to a mobile user, the method comprising:
paging (21) a mobile station (62) of the mobile user via a paging channel during a paging period to read the private information; and
reading (22) the private information by the mobile station (62) via the paging channel during a reading period after the paging period, wherein
when the mobile station (62) operates in a discontinuous reception, DRX, mode, the paging period is a paging DRX cycle, wherein the reading period is another paging DRX cycle after the paging DRX cycle.

2. The method of claim 1, wherein the reading period is synchronized according to the paging period.

3. The method of claim 1, wherein the mobile station (62) comprises a contact table (623) for storing related data of at least one contact of the mobile user, wherein the private information comprises an update of the related data of the contact.

4. A wireless communication network (60) for providing a private information to a mobile station (62) of a mobile user, comprising:
an application server (61) comprising a database (611) for storing the private information; and
a paging module (63) for receiving the private information from the application server (61), and paging the mobile station (62) via a paging channel during a paging period to read the private information;
wherein the paging module (63) is configured to allow the mobile station (62) to read the private information from the paging module (63) via the paging channel during a reading period after the paging period, wherein
when the mobile station (62) operates in a discontinuous reception, DRX, mode, the paging period is a paging DRX cycle, wherein the reading period is another paging DRX cycle after the paging DRX cycle.

5. The wireless communication network of claim 4, wherein the paging module (63) is configured to page the mobile station (62) by sending a paging message via the paging channel during the paging period to the mobile station (62), wherein the paging message comprises a paging cause for informing the mobile station (62) to read the private information.

6. The wireless communication network of claim 4, wherein each of the database (611) and the mobile station (62) stores a contact table of the mobile user, and the contact table stores related data of at least one contact of the mobile user, wherein when the related data stored in the contact table of the database is changed, the application server (61) is configured to generate the private information comprising an update of the related data which is used to update the contact table of the mobile station (62).

7. The wireless communication network of claim 4, wherein the paging module (63) is further configured to receive a corresponding value tag of the private information from the application server (61), wherein the corresponding value tag indicates how recent the private information is.

8. The wireless communication network of claim 4, wherein the paging module (63) is further configured to receive an identity of the mobile station (62) from the application server (61), wherein the paging module (63) is configured to page the mobile station according to the received identity.

9. A mobile station (62) for receiving a private information of a mobile user in a wireless communication network (60), said mobile station (62) comprising:
a receiving module (621) for receiving a paging message via a paging channel of the wireless communication network (60) during a paging period, wherein the paging message is used to page the mobile station (62) to read the private information; and
a reading module (622) for reading the private information via the paging channel of the wireless communication network (60) during a reading period after the paging period, wherein when the mobile station (62) operates in a discontinuous reception, DRX, mode, the paging period is a paging DRX cycle, wherein the reading period is another paging DRX cycle after the paging DRX cycle.

10. The mobile station of claim 9, further comprising:
a contact table (623) for storing related data of at least one contact of the mobile user, wherein the private information comprises an update of the related data of the contact.

## Patentansprüche

1. Verfahren, das in einem drahtlosen Kommunikationsnetzwerk (60) verwendet wird, um eine private Information an einen mobilen Nutzer vorzusehen, wobei das Verfahren Folgendes aufweist:
Pagen bzw. Benachrichtigen (21) einer mobilen Station (62) des mobilen Nutzers über einen Paging-Kanal während einer Paging-Periode, um die private Information zu lesen; und
Lesen (22) der privaten Information durch die mobile Station (62) über den Paging-Kanal während einer Leseperiode nach der Paging-Periode, wobei wenn die mobile Station (62) in einem diskontinuierlichen Empfangsmodus bzw. DRX-Modus arbeitet, die Paging-Periode ein Paging-DRX-Zyklus ist,
wobei die Leseperiode ein weiterer Paging-DRX-Zyklus nach dem Paging-DRX-Zyklus ist.

2. Verfahren gemäß Anspruch 1, wobei die Leseperiode gemäß der Paging-Periode synchronisiert wird.

3. Verfahren gemäß Anspruch 1, wobei die mobile Station (62) eine Kontakttabelle (623) zum Speichern zugehöriger Daten von zumindest einem Kontakt des mobilen Nutzers aufweist, wobei die private Information eine Aktualisierung der zugehörigen Daten des Kontaktes aufweist.

4. Drahtloses Kommunikationsnetzwerk (60) zum vorsehen einer privaten Information an eine mobile Station (62) eines mobilen Nutzers, das Folgendes aufweist:
einen Applikations- bzw. Anwendungsserver (61), der eine Datenbank (611) zum Speichern privater Information aufweist; und
ein Paging-Modul (63) zum Empfangen privater Information von dem Anwendungsserver (61), und zum Pagen der mobilen Station (62) über einen Paging-Kanal während einer Paging-Periode, um die private Information zu lesen;
wobei das Paging-Modul (63) so konfiguriert ist, dass es der mobilen Station (62) ermöglicht, die private Information von dem Paging-Modul (63) über den Paging-Kanal während einer Leseperiode nach der Paging-Periode zu lesen,
wobei wenn die mobile Station (62) in einem diskontinuierlichen Empfangsbzw. DRX-Modus arbeitet, die Paging-Periode ein Paging-DRX-Zyklus ist,
wobei die Leseperiode ein weiterer Paging-DRX-Zyklus nach dem Paging-DRX-Zyklus ist.

5. Drahtloses Kommunikationsnetzwerk gemäß Anspruch 4, wobei das Paging-Modul (63) so konfiguriert ist, dass es die mobile Station (62) benachrichtigt bzw. pagt, und zwar durch Senden einer Paging-Nachricht über den Paging-Kanal während der Paging-Periode an die mobile Station (62), wobei die Paging-Nachricht eine Paging-Ursache aufweist, um die mobile Station (62) zu informieren, die private Information zu lesen.

6. Drahtloses Kommunikationsnetzwerk gemäß Anspruch 4, wobei jede der Datenbanken (611) und die mobile Station (62) eine Kontakttabelle des mobilen Nutzers speichert, und die Kontakttabelle zugehörige Daten von zumindest einem Kontakt des mobilen Nutzers speichert, wobei wenn die zugehörigen Daten, die in der Kontakttabelle der Datenbank gespeichert sind, verändert werden, der Anwendungsserver (61) so konfiguriert ist, dass er die private Information erzeugt, die eine Aktualisierung der zugehörigen Daten aufweist, die verwendet wird, um die Kontakttabelle der mobilen Station (62) zu aktualisieren.

7. Drahtloses Kommunikationsnetzwerk gemäß Anspruch 4, wobei das Paging-Modul (63) ferner konfiguriert ist, um eine entsprechende Wertkennzeichnung der privaten Information von dem Anwendungsserver (61) zu empfangen, wobei die entsprechende Wertkennzeichnung anzeigt, wie aktuell die private Information ist.

8. Drahtloses Kommunikationsnetzwerk gemäß Anspruch 4, wobei das Paging-Modul (63) ferner so konfiguriert ist, dass es eine Identität der mobilen Station (62) von dem Anwendungsserver (61) empfängt, wobei das Paging-Modul (63) so konfiguriert ist, dass es die mobile Station gemäß der empfangenen Identität benachrichtigt.

9. Mobile Station (62) zum Empfangen einer privaten Information eines mobilen Nutzers in einem drahtlosen Kommunikationsnetzwerk (60), wobei die mobile Station (62) Folgendes aufweist:
ein Empfangsmodul (621) zum Empfangen einer Paging-Nachricht über einen Paging-Kanal des drahtlosen Kommunikationsnetzwerkes (60) während einer Paging-Periode, wobei die Paging-Nachricht verwendet wird, um die mobile Station (62) zu benachrichtigen bzw. pagen, um die private Information zu lesen; und
ein Lesemodul (622) zum Lesen der privaten Information über den Paging-Kanal des drahtlosen Kommunikationsnetzwerkes (60) während einer Leseperiode nach der Paging-Periode, wobei wenn die mobile Station (62) in einem diskontinuierlichen Empfangs- bzw. DRX-Modus arbeitet, die Paging-Periode ein Paging-DRX-Zyklus ist, wobei die Leseperiode ein weiterer Paging-DRX-Zyklus nach dem Paging-DRX-Zyklus ist.

10. Mobile Station gemäß Anspruch 9, die ferner Folgendes aufweist:
eine Kontakttabelle (623) zum Speichern zugehöriger Daten von zumindest einem Kontakt des mobilen Nutzers, wobei die private Information eine Aktualisierung der zugehörigen Daten des Kontaktes aufweist.

## Revendications

1. Procédé utilisé dans un réseau de communication sans fil (60) pour fournir des informations privées à un utilisateur mobile, le procédé comprenant :
téléavertir (21) un poste mobile (62) de l'utilisateur mobile par l'intermédiaire d'un canal de téléavertissement pendant une période de téléavertissement pour lire les informations privées ; et
lire (22), par le poste mobile (62), les informations privées par l'intermédiaire du canal de téléavertissement pendant une période de lecture après la période de téléavertissement, dans lequel lorsque le poste mobile (62) opère dans un mode de réception discontinue, DRX, la période de téléavertissement est un cycle DRX de téléavertissement, dans lequel la période de lecture est un autre cycle DRX de téléavertissement après le cycle DRX de téléavertissement.

2. Procédé selon la revendication 1, dans lequel la période de lecture est synchronisée en fonction de la période de téléavertissement.

3. Procédé selon la revendication 1, dans lequel le poste mobile (62) comprend une table de contacts (623) pour mémoriser des données associées d'au moins un contact de l'utilisateur mobile, dans lequel les informations privées constituent une mise à jour des données associées du contact.

4. Réseau de communication sans fil (60) pour fournir des informations privées à un poste mobile (62) d'un utilisateur mobile, comprenant :
un serveur d'application (61) comprenant une base de données (611) pour mémoriser les informations privées ; et
un module de téléavertissement (63) pour recevoir les informations privées à partir du serveur d'application (61), et téléavertir le poste mobile (62) par l'intermédiaire d'un canal de téléavertissement pendant une période de téléavertissement pour lire les informations privées ;
dans lequel le module de téléavertissement (63) est agencé pour permettre au poste mobile (62) de lire les informations privées à partir du module de téléavertissement (63) par l'intermédiaire du canal de téléavertissement pendant une période de lecture après la période de téléavertissement, dans lequel lorsque le poste mobile (62) opère dans un mode de réception discontinue, DRX, la période de téléavertissement est un cycle DRX de téléavertissement, dans lequel la période de lecture est un autre cycle DRX de téléavertissement après le cycle DRX de téléavertissement.

5. Réseau de communication sans fil selon la revendication 4, dans lequel le module de téléavertissement (63) est agencé pour téléavertir le poste mobile (62) en envoyant au poste mobile (62) un message de téléavertissement par l'intermédiaire du canal de téléavertissement pendant la période de téléavertissement, dans lequel le message de téléavertissement comprend une cause de téléavertissement pour informer le poste mobile (62) qu'il faut lire les informations privées.

6. Réseau de communication sans fil selon la revendication 4, dans lequel chacun de la base de données (611) et du poste mobile (62) mémorise une table de contacts de l'utilisateur mobile, et la table de contacts mémorise des données associées d'au moins un contact de l'utilisateur mobile, dans lequel lorsque les données associées mémorisées dans la table de contacts de la base de donnée sont changées, le serveur d'application (61) est agencé pour générer les informations privées comprenant une mise à jour des données associées qui sont utilisées pour mettre à jour la table de contacts du poste mobile (62).

7. Réseau de communication sans fil selon la revendication 4, dans lequel le module de téléavertissement (63) est en outre agencé pour recevoir une étiquette de valeur correspondante des informations privées à partir du serveur d'application (61), dans lequel l'étiquette de valeur correspondante indique l'ancienneté des informations privées.

8. Réseau de communication sans fil selon la revendication 4, dans lequel le module de téléavertissement (63) est en outre agencé pour recevoir une identité du poste mobile (62) à partir du serveur d'application (61), dans lequel le module de téléavertissement (63) est agencé pour téléavertir le poste mobile en fonction de l'identité reçue.

9. Poste mobile (62) pour recevoir des informations privées d'un utilisateur mobile dans un réseau de communication sans fil (60), le poste mobile (62) comprenant :
un module récepteur (621) pour recevoir un message de téléavertissement par l'intermédiaire d'un canal de téléavertissement du réseau de communication sans fil (60) pendant une période de téléavertissement, le message de téléavertissement étant utilisé pour téléavertir le poste mobile (62) qu'il faut lire les informations privées ; et
un module de lecture (622) pour lire les informations privées par l'intermédiaire du canal de téléavertissement du réseau de communication sans fil (60) pendant une période de lecture après la période de téléavertissement, dans lequel lorsque le poste mobile (62) opère dans un mode de réception discontinue, DRX, la période de téléavertissement est un cycle DRX de téléavertissement, dans lequel la période de lecture est un autre cycle DRX de téléavertissement après le cycle DRX de téléavertissement.

10. Poste mobile selon la revendication 9, comprenant en outre :
une table de contacts (623) pour mémoriser des données associées à au moins un contact de l'utilisateur mobile, les informations privées comprenant une mise à jour des données associées du contact.
